**Europäisches Patentamt**

**European Patent Office**

**Office européen des brevets**

(19)

(11) Numéro de publication: **0 223 807**

**B1**

(12)

# FASCICULE DE BREVET EUROPEEN

(45) Date de publication du fascicule du brevet: **07.11.90**

(21) Numéro de dépôt: **86903408.2**

(22) Date de dépôt: **26.05.86**

(86) Numéro de dépôt international:
**PCT/FR86/00177**

(87) Numéro de publication internationale:
**WO 86/06930 04.12.86 Gazette 86/26**

(60) Demande divisionnaire 90106484.0 déposée le
26/05/86.

(51) Int. Cl.⁵: **A 01 G 23/00, C 10 L 5/44,
F 23 B 1/14**

(54) **PROCEDE D'OBTENTION DE BOIS TORREFIE, PRODUIT OBTENU, ET APPLICATION A LA PRODUCTION D'ENERGIE.**

(30) Priorité: 24.05.85 FR 8507839
07.10.85 FR 8514792
10.01.86 FR 8600307
13.02.86 FR 8601969

(43) Date de publication de la demande:
**03.06.87 Bulletin 87/23**

(45) Mention de la délivrance du brevet:
**07.11.90 Bulletin 90/45**

(84) Etats contractants désignés:
**AT BE CH DE GB IT LI LU NL SE**

(56) Documents cités:
**WO-A-79/00610
DE-A-3 018 039
DE-A-3 041 627
FR-A-2 489 356
FR-A-2 512 636
US-A-4 231 302
US-A-4 295 822
US-A-4 338 985**

(73) Titulaire: **LECLERC DE BUSSY, Jacques
Bussy
F-80290 Poix de Picardie (FR)**

(72) Inventeur: **LECLERC DE BUSSY, Jacques
Bussy
F-80290 Poix de Picardie (FR)**

(74) Mandataire: **Colas, Jean-Pierre et al
Cabinet de Boisse 37, avenue Franklin D.
Roosevelt
F-75008 Paris (FR)**

Courier Press, Leamington Spa, England.

**Description**

La présente invention est relative à un produit provenant de la torréfaction de morceaux de bois, à un procédé pour l'obtention de cette matière et à une application particulière de ce produit.

On sait que le bois, chauffé à une température de 200 à 300°C environ, donne ce qu'on peut appeler du "bois torréfié", c'est-à-dire un produit à forte teneur en carbone fixé, à pourvoir calorifique élevé, à trés faible teneur en eau, environ 3% non hygroscopique et imputrescible, ayant gardé pratiquement tous les composé pyroligneux.

Il a été proposé d'amener à l'état de bois torréfié des morceaux ligneux d'origines diverses afin de les agglomérer à l'aide d'un liant ajoute (FR—A—953 004) ou en utilisant comme liant les goudrons produits par le bois lui-même (CH—A—228 877), pour en faire un combustible.

On a également proposé, EP—A—007 374, d'utiliser du bois torréfié sous atmosphère neutre sans agglomération ultérieure, notamment comme combustible.

Un inconvénient du bois torréfié, tel qu'il a jusqu'ici été proposé, est qu'il est fabriqué à partir de déchets d'exploitations forestières ou de l'industrie du bois, c'est-à-dire d'éléments de forme et composition très irrégulières. Il en résulte un produit lui-même irrégulier, et ayant une granulométrie peu constante et surtout très étalée. De ce fait on a un produit que se prête mal à des traitements automatiques, du fait qu'il est sujet, lorsqu'il se déplace, à des blocages ou des formations de voutes, et que sa perméabilité, en masse, et très irrégulière. On peut remédier à ces défauts par exemple en coupant des morceaux de bois à des dimensions uniformes, ou bien en agglomérant des particules fines, notamment de la sciure, mais ces opérations sont coûteuses, et réduisent alors l'intérêt économique du bois torréfié.

Le but de l'invention est de fournir un procédé d'obtention de bois torréfié qui confère à ce produit des propriétés avantageuses du point de vue de sa régularité et de son prix de revient, par comparaison avec les procédés analogues actuellement connus.

Un autre but de l'invention, encore, est de fournir, à titre de produit nouveau, le bois torréfié provenant du procédé d'obtention ci-dessus.

Un autre but de l'invention est de fournir un procédé de production d'énergie utilisant le procédé d'obtention de bois torréfié ci-dessus.

L'invention fournit, en conséquence, un procédé d'obtention d'un produit utilisable notamment pour la production d'énergie thermique, ce procédé comprenant un séchage suivi d'une torréfaction de morceaux de bois à une température de 250 à 280°C en atmosphère non oxydante, suivie d'un refroidissement, caractérisé en ce qu'il comprend les étapes suivantes précédant le séchage:

a) culture de végétaux susceptibles de donner après coupe, des rejets ligneux sensiblement rectilignes de diamètre compris entre 5 et 20 mm, la culture desdits végétaux étant conduite de façon à obtenir lesdits rejets;

b) récolte des rejets suivie d'un tronçonnage de ceux-ci en bâtonnets "verts" non écorcés, de longueur uniforme, comprise entre 10 et 25 mm environ.

L'invention fournit aussi un produit provenant de la torréfaction entre 350 et 280°C de fragments ligneux, caractérisé en ce qu'il se présente essentiellement sous la forme de bâtonnets de diamètre compris entre 5 et 20 mm, non écorcés et de longueur uniforme comprise entre 10 et 25 mm environ.

L'invention fournit encore un procédé de production d'énergie thermique à l'aide du produit ci-dessus, caractérisé en ce qu'on procède à la combustion du produit torréfié dans une installation fonctionnant de façon automatisée.

Les opérations de tronçonnage fournissent des bâtonnets verts de longueur uniforme et à peu près égale à leur diamètre moyen, ce qui est la configuration la plus favorable pour des traitements ultérieurs par voie automatique, en effet, cette configuration conduit aux écoulements en masse les plus réguliers, avec des talus de pente très constants, et une perméabilité en masse très importante et, également uniforme.

De préférence, ladite culture comprend l'obtention de souches enracinées desdits végétaux et des coupes périodiques de rejets faites au-dessus du niveau du collet de chaque végétal, les coupes successives étant faites à des hauteurs croissantes, au moins jusqu'à ce que la densité de rejets par unité de surface atteigne la valeur désirée.

On conçoit qu'ils s'agit d'une culture de type "industriel" beaucoup plus proche de celle des céréales que des exploitations forestières usuelles, et qu'elle est facilement mécanisable, avec des matérials analogues à ceux des cultures céréalières et quelquefois les mêmes.

Avantageusement, la coupe est faite lorsque les rejets ont une hauteur de 1,5 à 2 mètres, et de préférence après la chute des feuilles. On obtient ainsi une plus grande régularité de forme des tronçons, car le diamètre des rejets de grande longueur varie lentement depuis la base jusqu'au bourgeon terminal, et l'absence de feuilles élimine la nécessité d'un tri ultérieure en même temps qu'elle facilite la mise en place desdits rejets sur une machine automatique de tronçonnage.

Avantageusement, le tronçonnage est fait immédiatement après la coupe. On évite ainsi tous problèmes de transport et de manutention.

Suivant une modalité intéressante, on opère le tronçonnage en alignant les rejets coupés parallèlement entre eux, et en les faisant passer devant une série de couteaux rotatifs. On obtient ainsi, avec des machines simples, des tronçons de longueur égale.

Une étape importante du procédé est la torréfaction. En effet, au-delà d'une température de l'ordre de 250°C, la transformation du bois devient exothermique, et, en présence d'air, une inflammation est à craindre si la réaction est mal contrôlée. Il est donc connu que l'emploi d'une atmosphère neutre est préférable.

Suivant une modalité préférée de l'invention, on met à profit le fait que les tronçons "verts" de même que les tronçons torréfiés, présentent, en masse, une perméabilité aux gaz importante et régulière, même si, individuellement, chaque tronçon n'est pas perméable: on utilise un mode de torréfaction caractérisé en ce que, dans un réacteur, on place une masse de tronçons à torréfier, et on fait circuler dans cette masse un gaz non oxydant, ce gaz pénétrant dans la masse à une température supérieure à celle de la torréfaction, traversant la masse en passant s'abord sur des tronçons non séchés ou partiellement séchés et sortant de la masse en passant sur les tronçons en fin de torréfaction et en ce que la vitesse de circulation des gaz n'est que faiblement inférieure à celle qui causerait l'entraînement des tronçons torréfiés par le courant de gaz.

Le mode de circulation des gaz à co-courant a pour conséquence d'abord un échauffement brusque des tronçons verts, avec départ rapide de l'eau qui entraîne une large ouverture des pores, et ensuite une différence faible de température entre les tronçons en fin de torréfaction et le gaz qui les entoure, ce qui rend plus facile le contrôle de la réaction, en vue notamment d'empêcher son emballement. Les gaz cependant circulent à grande vitesse, ce qui facilité l'obtention de températures homogènes. Cette vitesse est facilitatée par la perméabilité de la masse.

De préférence, ledit gaz non oxydant circule en partie en circuit fermé, et est constitué essentiellement de vapeur d'eau provenant des tronçon et de gaz de combustion provenant d'un brûleur destiné à élever la température dudit gaz. La forte capacité calorifique de la vapeur d'eau facilité les échanges, d'autre part cette vapeur a l'avantage ici d'être gratuite, on ajoutera qu'elle n'est ni toxique ni polluante.

Avantageusement, une partie dudit gaz est refroidie et débarrassée d'une partie de son eau, puis envoyée dans la masse qui vient d'être torréfiée, de façon à la refroidir et à empêcher l'apparition de réactions exothermiques. On forme ainsi un système particulièrement intéressant, puisque la capacité calorifique de la vapeur d'eau est encore une fois mise à profit pour le contrôle de la bonne marche du processus.

Les modalités ce-dessus permettent des temps d'opérations très brefs, et avantageusement le temps de torréfaction à partir du moment où le produit atteint 100°C ne dépasse pas 10 minutes. Cela rend la marche encore plus facile à contrôler, car les réactions exothermiques n'ont que peur de temps pour apparaître.

Avantageusement, la torréfaction et le refroidissement sont effectués dans une enceinte unique s'étendant verticalement et pourvue de dispositifs étanches pour l'admission à la partie supérieure, et pour l'évacuation à la partie inférieure, du gaz non oxydant à hauts température, lequel est envoyé à la partie supérieure sous une pression supérieure à la pression atmosphérique, du gaz non oxydant à basse température étant envoyé à la partie inférieure sous une pression supérieure à la pression atmosphérique, un moyen d'extraction étant prévu pour faire passer le produit qui a été torréfié dans la zone supérieure de l'enceinte vers la zoe inférieure, où il se refroidit. On réalise ainsi une unité compacte, où les pertes thermiques sont réduites. En outre, le contrôle de la marche est facilitée: si, par exemple, à la suite d'un échauffement exagéré on réduit l'envoi de gaz chaud, il en résulte, dans la partie centrale, un afflux de gaz froid qui amplifié l'effet et l'inertie thermique est donc réduite.

Avantageusement, on renvoie à la partie supérieure de l'enceinte une partie du gaz non oxydant qui a été évacué de la zone centrale de l'enceinte. Cela permet d'obtenir, en limitant les pertes thermiques, l'atmosphère nécessaire en partie haute du four.

Avantageusement aussi le séchage précède la torréfaction sans refroidissement intermédiaire et de préférence ce séchage est opéré à l'aide des gaz chauds provenant de la torréfaction. Il s'agit ici du séchage à température inférieure à 100°C. Les dispositions qu'on vient de mentionner limitent encore les pertes d'énergie.

Le produit de l'invention est apte à de nombreuses applications.

Il constitue en effet une matière première de choix pour toutes sortes de traitements chimiques, y compris la combustion qui sera examinée plus loin. On notera aussi que son imputrescibilité peut être mise à profit pour constituer par mélange avec du béton, des agglomérés isolants légers pour le bâtiment. On observera aussi qu'il peut être additionné à divers déchets des exploitations forestières ou des industries du bois qui, autrement seraient pratiquement inexploitables, et qui peuvent ainsi être utilisés facilement dans un brûleur par exemple.

On va décrire maintenant plus en détail l'application du produit de l'invention à la production d'énergie.

De préférence selon cette application, on extrait par distillation sensiblement toute les matières pyroligneuses contenues dans le produit torréfié, on transforme le carbone restant en monoxyde de carbone, la chaleur produite par cette réaction étant utilisée pour opérer ladite distillation, et on envoie ensemble le mélange des matières pyroligneuses et du monoxyde de carbon dans un brûleur, en maintenant la température desdites matières pyroligneuses au dessus de leur point de condensation:

Suivant des modalités avantageuses:

—la distillation des matières pyroligneuses et la transformation du carbone en monoxyde de carbone ont lieu dans le même foyer, qui est pourvu d'une part d'un ou plusieurs passages de gaz pour balayer les matières pyroligneuses et d'autre part d'un ou plusieurs passages d'air pour la transformation du carbone en monoxyde de carbone, le foyer comportant une sortie commune pour les matières pyroligneuses distillées et pour le monoxyde de carbone.

—le gaz destiné à balayer les matières pyroligneuses traverse, dans le sens des températures croissantes, une masse de produit torréfié d'épaisseur suffisante pour assurer un débit sensiblement constant.

—le foyer est du type vertical, le produit toréfié progressant en descendant dans ce foyer, le gaz de balayage traversant la masse de produit torréfié en descendant, la ou les arrivées d'air pour la transformation du carbone étant situées au-dessus d'une couche de cendre maintenue à un niveau sensiblement constant, et la sortie commune des matières pyroligneuses et du monoxyde de carbone étant située entre le niveau des cendres et celui de la base de la zone de distillation.

—on utilise un brûleur du type à induction à air pilote capable d'engendrer dans le foyer une dépression suffisante pour y aspirer le gaz de balayage et l'air de transformation du carbone.

L'invention va maintenant être exposée plus en détail à l'aide d'exemples pratiques illustrés à l'aide des dessins parmi lesquels:

la figure 1 est un schéma synoptique de l'ensemble du procédé;

la figure 2 est une vue perspective d'un dispositif de récolte en action;

la figure 3 est une vue schématique en coupe d'un torréfacteur;

la figure 4 est une vue schématique en coupe d'une installation de combustion du produit, et

la figure 5 est une vue schématique en coupe d'une variante de la figure 4.

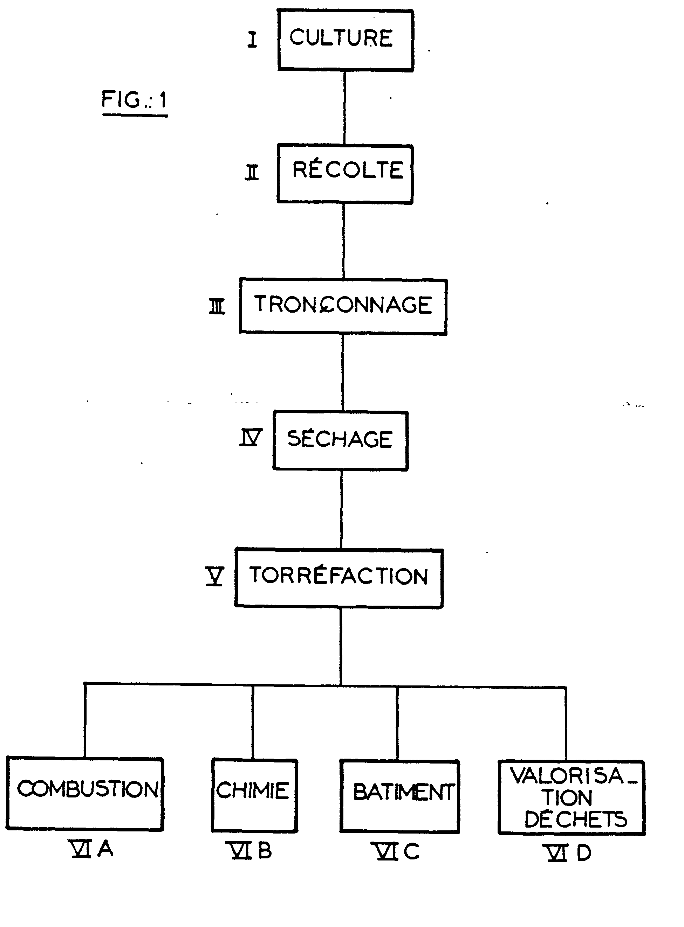

Le schéma de la figure 1 indique les étapes successives du procédé:

—culture I—récolte II—coupe III—séchage des tronçons verts IV—torréfaction V—application à la production d'énergie VIA ou à la chimie VIB ou au bâtiment VIC ou au traitement de déchets combustibles VID.

Le procédé mis en oeuvre pour la culture et la production intensive en cycle annuel, avec récolte mécanisée de matière ligneuse torréfiable sous forme de tiges ou rejets verticaux de petits diamètres, tout en visant une augmentation de la durée végétative des arbres cultivés à cet effet, comporte la mise en oeuvre d'une taille de récolte qui d'une part, respecte le collet de l'arbre et d'autre part, conditionne l'établissement d'une structure branchue basse permettant la vie prolongée des arbres et la récolte mécanisée desdits rejets.

On sait que le collet de l'arbre est la zone (ou la section) de l'arbre qui sépare, à la surface du sol, le faisceau radiculaire de la partie aérienne comprenant tronc et ramure. La destruction annuelle de ce collet par coupe rase provoque à courte échéance le dépérissement du sujet.

L'expérience montre que le collet de l'arbre est épargné si la coupe est effectuée au-dessus du sol même à la distance courte de 10 cm par exemple, à condition que la portion de tige restée en terre et qui formera le tronc court ne soit plus affectée par les coupes suivantes.

Le procédé se caractérisé aussi en ce que à la fin de l'année d'implantation, la première coupe sur sujets bouturés ou repiqués est exécutée selon un plan équidistant du sol situé à quelque 10 centimètres au-dessus de sa surface, les tiges restant en terre étant destinées à former les troncs courts des futurs arbres.

Les coupes suivantes sont plus productives puisque les faisceaux radiculaires se sont installés et qu'il se sera formé de nombreux rejets.

Selon l'invention les coupes rases interviennent lorsque les rameaux ont atteint 1,5 à 2 centimètres de diamètre à la base et 150 à 200 centimètres du hauteur, leur densité pouvant dépasser 100 tiges au mètre carré.

La période de récolte en Europe, se situe de novembre à février, en effet à cette époque les feuilles sont tombées; les pousses de l'année sont "aoûtées" c'est-à-dire transformées en bois; l'écorce adhère au bois des tiges la sève s'est raréfiée et l'énergie destinée au séchage sera moindre.

On sait d'autre part que certaines espèces d'arbres tels les fruitiers font l'objet de tailles annuelles qui laissent sur les branches les bases des pousses anuelles ayant le plus souvent la forme de crosses. Celles-ci portent les bourgeons qui seront les points de départ des rejets de l'année suivante. Cette façon de faire qui n'affecte pas la vie de l'arbre permet la mise en forme de la ramure.

Le procédé suivant l'invention se caractérise encore en ce que les récoltes annuelles des rejets de branches sont réalisées par coupes mécanisées selon des plans équidistants du sol, mais rehaussés de quelque 2 centimètres par an, de sorte que les bases des repousses restées sur branches, ayant la forme de crosses et portant les bourgeons devant donner naissance aux rejets de l'année suivante contribuent à l'expansion de la structure branchue et basse de l'arbre.

Une autre caractéristique de l'invention est relative à la distance entre sujets d'une même ligne d'arbres. Elle doit être telle que leur expansion qui conditionne la survie de chaque arbre soit suffisante. Tandis que la distance à établir entre les lignes sera augmentée de l'espace nécessaire au libre passage des roues de machines devant prendre appui sur le sol dans l'interligne, espace maintenu par tailles correctives éventuelles.

Après la récolte, le passage ouvert est utilisé pour effectuer les opérations relatives aux amendements, traitements ou encore pour détasser le sol et le sarcler.

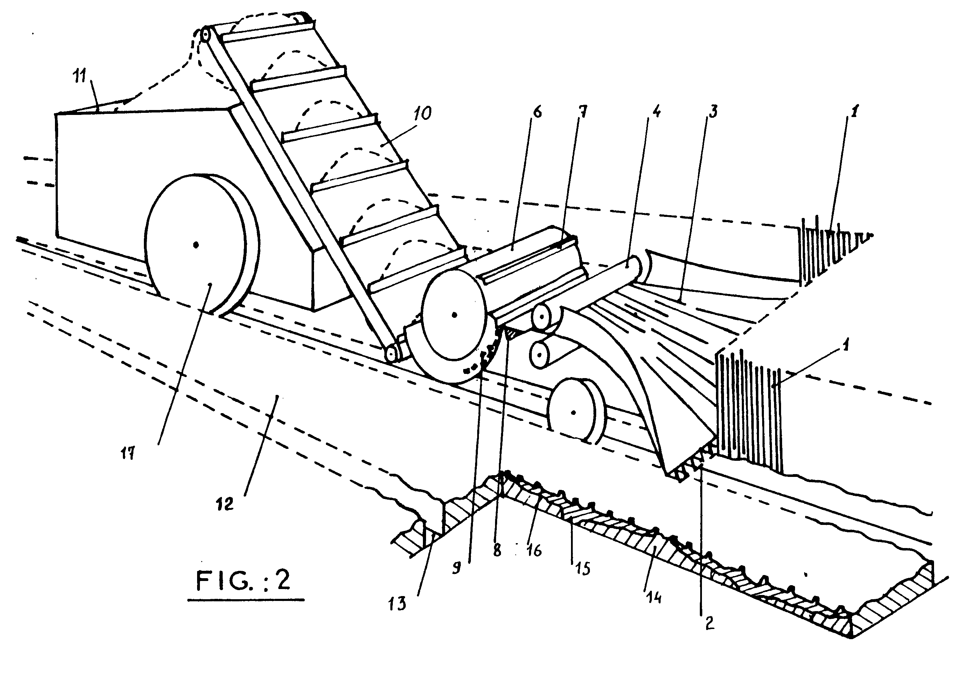

L'invention comporte aussi un dispositif de récolte représenté schématiquement en action sur la figure 2 jointe. En 1 on aperçoit la haute densité des rejets à récolter. La barre de coupe frontale 2 de la machine est du même que celles employées pour la récolte de céréales. Les rejets coupés 3 sont acheminés vers les rouleaux engreneurs 4 qui règlent leur vitesse d'avancement vers le tambour du hachoir 6 comportant des lames radiales 7 défilant devant le contre-fer 8. Cette action de cisaillement tranche les rejets et les divise en petits tronçons de courte longueur 9. Ces derniers sont repris par un élévateur 10 et conduits vers la benne 11.

La surface 12 représent le sol laissée après l'intérvention de la machine de récolte.

En 14 est représentée une coupe selon un plan vertical situé dans l'axe d'une ligne d'arbres après la récolte. On y distingue les troncs courts 15 et la structure branchue 16 de 2 arbres.

La voie réouverte, après la récolte, nécessaire au libre passage des roues de machine 17 est représentée en 13.

Le dispositif de récolte suivante l'invention est caractérisé en ce qu'il enjambe successivement les lignes d'arbres et comporte une barre de coupe frontale 2 dont la hauteur réglable détermine celle, rehaussée chaque année, du plan de coupe au-dessus du sol, ladite barre permettant par son action la récolte des rejets de l'année et de même la réouverture du passage 13 destiné aux roues du dispositif, passage précédemment occupé par lesdits rejets, en vis-à-vis et appartenant à 2 lignes d'arbres consécutives, ledit dispositif effectuant simultanément le tranchage 6 desdits rejets en tronçons 9 de courte longueur rassemblés dans la benne 11.

A titre d'exemple, le règlage en hauteur de la barre de coupe 2 du dispositif de récolte, des rejets d'arbres ayant 20 ans de production, devra être effectué à 48 centimètres. En effet aux 10 centimètres (hauteur de la première coupe) il faudra ajouter 19 fois 2 centimètres (valeur de la rehausse annuelle) opération dont le résultat est bien 48 centimètres.

Le produit ligneux torréfiable obtenu est constitué exclusivement de petits tronçons, issus du tranchage des rameaux, approximativement cylindriques, enveloppés de leur écorce, celle-ci entrant pour une part importante dans la qualité et la présentation du combustible final à obtenir et en étant un caractère propre.

Le procédé mis en oeuvre pour la culture d'espèces d'arbres ou arbustes très différents en vue d'en récolter la production ligneuse sera avantageusement appliqué en Europe ou sous de climats analogues à l'exploitation du cytise qui fournit une grande densité de rejets et prélève à l'air atmosphérique l'azote qui lui est nécessaire, ou encore du pommier et du poirier qui ont la propriété exceptionnelle de fournir, après torréfaction des tronçons, un combustible de densité apparente de l'ordre de 420 kg/m$^3$.

Les tronçons, tels qu'ils ont été précédemment définis, contiennent selon la nature du bois que les compose une quantité d'eau relativement élevée comprise entre 40 et 60%. Cette eau doit être nécessairement éliminée avant que la torréfaction puisse intervenir.

Le procédé selon l'invention se propose l'extraction brutale de l'eau encore contenue dans les tronçons, dont les canaux ont été ouverts aux deux extrémités lors du tranchage à l'aide d'un flux rapide de gaz à haute température balayant leurs surfaces.

Le procédé de grillage et de torréfaction sous atmosphère neutre, de fragments de bois encore humides amenés en continu et rassemblés en masse de hauteur maintenue constante dans un réacteur de forme tronconique placé verticalement, est caractérisé en ce que, mis en mouvement grâce à la dépression établie au travers de ladite masse, le gaz caloporteur neutre est élevé à une température supérieure à celle requise pour obtenir la torréfaction du bois et suffisante pour réaliser, par grillage, le séchage brutal desdits fragments dès que déposés dans le réacteur, séchage ayant pour effet d'abaisser la température desdits gaz qui mélés à la vapeur dégagée constituent le flux gazeux neutre et ramené à la température capable d'assurer pendant qu'il la traverse, la torréfaction de ladite masse.

C'est un aspect du mode de torréfaction selon l'invention d'utiliser l'eau, contenue dans le bois luimème, transformée en vapeur comme un des constituants de l'atmosphère neutre dans laquelle doit s'effectuer la torréfaction.

Afin de réaliser l'objet du procédé ci-dessus décrit, il est indispensable que les échanges calorifiques entre le gaz caloporteur et les fragments de bois soient rapides. Ce résultat provient de la mise en oeuvre d'un flux gazeux, enveloppant lesdits fragments, circulant à grande vitesse et ayant une inertie calorifique suffisante pour assurer d'abord le grillage provoquant le séchage initial du bois et ensuite sa torréfaction.

On conçoit aussi qu'il est économiquement intéressant de faire se succéder immédiatement dans le même appareil les opérations de séchage et de torréfaction.

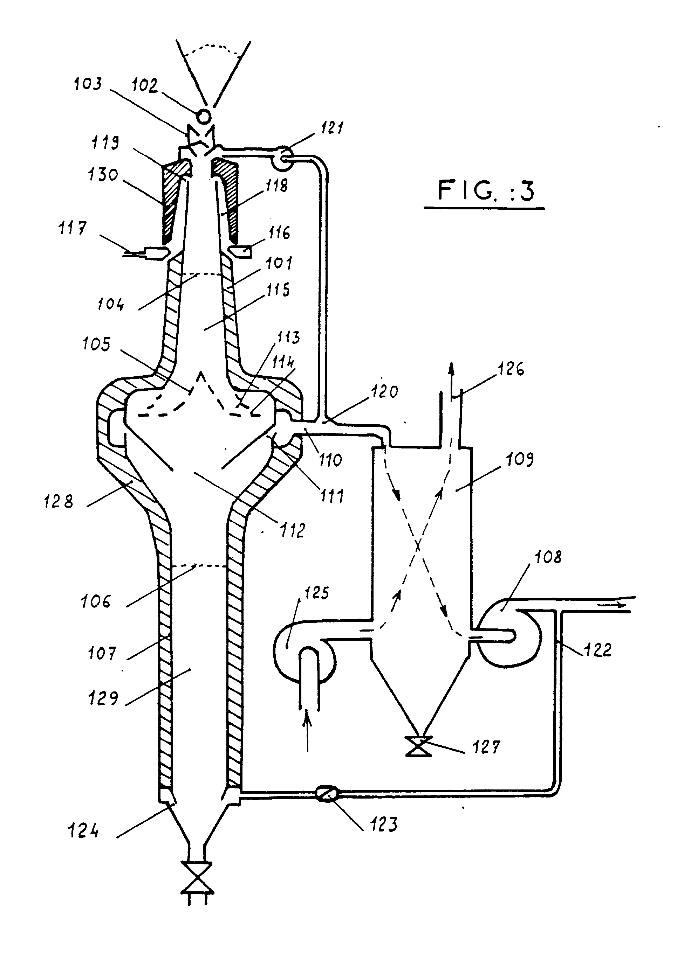

La description qui va suivre d'un dispositif, schématiquement représenté en coupe à la figure 3, conforme à l'invention ainsi que son mode de fonctionnement permettront une meilleure compréhension du procédé.

Le dispositif comporte essentiellement un organe dénommé réacteur 101 dans lequel sont effectuées les opérations de grillage produisant le séchage initial, suivi de la torréfaction des fragments de bois amenés en continu par le distributeur 102. Les fragments passent au travers de chicanes 103, dont nous verrons plus loin l'objet, avant d'être déposés sur le lit de grillage 104. Ce lit est maintenu à hauteur constante grâce à l'action d'un extracteur à plateau rotatif 105 qui enlève en continu le bois une fois torréfié. Les allures du distributeur et de l'extracteur sont réglées dans le rapport convenable qui tient compte du retrait qui accompagne le séchage et la torréfaction. Le temps de séjour dans le réacteur est déterminé par la vitesse du transfert.

Le bois torréfié, extrait du réacteur, est déposé au sommet 106 de la masse rassemblée dans le réceptacle 107. Ce dernier, d'une certaine capacité est équipé à sa base d'un système appropriée et non représenté, à double sas permettant le retrait par bols successifs du bois torréfié, sans permettre la pénétration d'air dans le dispositif.

Un ventilateur haute pression 108 met en dépression le dispositif comprenant le réceptacle, l'extracteur et le réacteur. Cette dépression est transmise au dispositif par l'intermédiaire de l'échangeur-condenseur 109, de la tuyauterie 110, de l'ajutage annulaire 111 et de l'ouverture 112.

Elle est appliquée à la masse 115 en cours de traitement en passant au travers du plateau rotatif et perforé 105 de la base de la jupe du réacteur 113 elle aussi perforée et de l'espace annulaire 114 occupé par des fragments de bois torréfié en cours de transfert.

On remarquera la grande surface que présentent au passage du flux gazeux ces éléments situés à la base du réacteur. Cette disposition ralentit la vitesse du flux dont la force vive n'est plus suffisante pour entraîner les fragments situés dans l'espace 114.

Cette dépression met en mouvement le flux de gaz caloporteur et circulant à grande vitesse entre les fragments de bois déposés sur le lit 105, flux appelé à réaliser les traitements successifs de grillage et de torréfaction de bois.

Le procédé selon l'invention se caractérisé encore en ce que le gaz caloporteur est constitué du mélange d'une partie importante des gaz neutres recyclés prélevés à la sortie du réacteur 101, et donc à la température de torréfaction, et des gaz brûlés issus de la combustion dans la chambre 118 d'un gaz combustible amené au brûleur 116, mélange dont la température, deux à trois fois supérieure à celle appliquée lors de la torréfaction qui suivra, est capable de réaliser sur le lit fixe 104 du réacteur 101 le grillage initial du bois humide.

Le gaz recyclé est repris au circuit en 120 à l'aide du surpresseur 121. Le gaz combustible est amené au brûleur annulaire 116 par la canalisation 117.

Le surpresseur 121 ramène le gaz prélevé à la sortie du réacteur à une pression suffisante pour alimenter ledit réacteur 101 et pour créer au travers de la chicane 103 une légère surpression s'opposant à l'entrée de l'air à ce niveau, mais autorisant l'entrée des fragments de bois amenés par le distributeur 102.

Le gaz combustible sera avantageusement celui obtenu à partir d'une portion de bois toréfié lui-même, prélevé sur la production et gazéifié. L'ordre de grandeur de la quantité consommée est d'environ 10% à 12%.

Le temps nécessaire aux opérations successives de grillage provoquant le séchage brutal du bois et de sa torréfaction s'établir entre 3 à 6 minutes selon les températures mises en oeuvre et la dimension moyenne des fragments (inférieure ou égale au cm$^3$). Ces temps qui sont donnés à titre d'exemple ne sont pas limitatifs. Ils correspondent au temps de séjour moyen des fragments dans le réacteur.

Le gaz issu du réacteur et qui n'a pas été recyclé, travers l'échangeur 109 avant d'être rejeté à l'atmosphère. Cet échangeur est aussi un condenseur, il permet d'extraire l'eau collectée en 127 et évacuée à l'aide d'une pompe non représentée, et, de récupérer les calories contenues dans lesdits gaz. Ces calories sont transférées à de l'air ambiant amené à l'échangeur 109 par le ventilateur 125 et conduit, en passant par la canalisation 126 vers un séchoir à bois, non représenté, installé en amont du réacteur. Ce séchoir a pour objet d'abaisser d'environ 50% la teneur en eau du bois, matière première et de le préchauffer à une température voisine de 90°C. Ces techniques sont suffisamment connues pour qu'il ne soit pas nécessaire de les exposer en détail.

Le procédé selon l'invention se caractérisé aussi par le fait qu'une partie des gaz neutres, refroidis après passage dans l'échangeur 109 est introduits par l'ajutage annulaire 124 à la base du réceptacle 107 est mise en mouvement par la dépression régnant dans le dispositif et traverse la masse 129 de bois torréfié pour en extraire les calories récupérables et en abaisser la température de façon à éviter la prise de feu spontanée possible lors de la mise à l'atmosphère dudit bois à la température de torréfaction.

Etant donné les températures mises en jeu, l'ensemble du dispositif est revêtu d'un isolant calorifique 128.

Portée à haute température la chambre de combustion 118 est coiffée d'un revêtement réfractaire 130; cette chambre a pour objet d'assurer la combustion complète du mélange combustible qui est établis sans excès d'air. En effet le flux gazeux doit être neutre.

La portion haute du réacteur fait partie de la chambre de combustion. Par son rayonnement interne, elle contribue à l'homogénéité de température sur toute la section du flux caloporteur.

Les gaz neutres, refroidis par l'échangeur 109 et extraits par le ventilateur 108 contiennent une certaine proportion de fumées constituées de goudrons formés notamment au moment du grillage réalisé dans le réacteur 101.

Afin d'éviter le rejet de ces fumées et de réintégrer au combustible et sous cette forme un des éléments constitutifs, le procédé se caractérisé enfin par le fait que lesdits gaz sont filtrés par passage au travers d'une masse importante de bois déjà torréfié et rassemblé dans un silo de transfert fonctionnant en continu avant le stockage dudit combustible.

Les goudrons déposés en très faible quantité à la surface des fragments diffusent aisément dans le bois devenu poreux après torréfaction.

Les dispositions prises pour les mesures de pressions, de débits et de températures ou encore pour le contrôle de fonctionnement du dispositif sortent du cadre de l'invention et pour cette raison n'ont pas été exposées.

La torréfaction effectuée à 250—280°C dans un appareil tel qu'on vient de le décrire, a pour effet de fixer la teneur en eau du bas à 3% et d'en faire un produit aux caractéristiques stables. On sait d'autre part que la torréfaction n'enlève pas au bois les produits pyroligneux qui représentent environ 50% du potentiel énergétique total. Le bois torréfié a un pouvoir calorifique de l'ordre de 5 200 Kcal/Kg. Il se prête aux manutentions mécanisés sans former de poussières. Il se conserve bien même en local humide. Il s'allume facilement. C'est entre 250 et 350°C que peuvent être extraites les vapeurs pyroligneuses, vers 350 à 500°C les goudrons, au-delà subsiste le charbon de bois.

On sait enfin que dans la technique des brûleurs à gaz dits à induction il est fait emploi de tuyères à ajutage axial (Venturi) ou annulaire, alimenté en fluide dit inducteur sous pression tandis qu'en amont de l'ajutage la dépression résultante met en mouvement le fluide dit induit. Le fluide pilote et inducteur peut être le gaz carburant ou l'air pouvant être préalablement chauffé.

Dans le dispositif de combustion qu'on va décrire, on réalise la transformation du combustible initial que représente le bois torréfié en un mélange de vapeurs pyroligneuses et d'oxyde de carbone destiné à alimenter un brûleur capable de fournir une flamme continue susceptible d'être employée dans les appareils thermiques existants en substitution des brûleurs à huile ou à gaz.

Le dispositif de combustion, qui comporte d'une part, le foyer dont l'objet principal est de permettre l'extraction des vapeurs pyroligneuses, cette opération s'effectuant grâce aux calories provenant de la combustion partielle du charbon de bois, résidu de ladite extraction, combustion partielle qui fournit en outre une certain quantité d'oxyde de carbon, et d'autre part le brûleur dont l'objet est d'assurer la combustion complète du mélange combustible issu du foyer, ce dispositif est caractérisé en ce que lesdits foyer et brûleur sont associés dans une même ensemble de façon telle que la température desdits vapeurs ainsi que du conduit chargé du transfert ne puisse s'abaisser en dessous de la température de condensation de l'élément distillé le plus lourd.

Le dispositif de combustion peut revêtir deux formes de réalisations: dans le première le foyer et le brûleur sont accolés, et le divergent de la tuyère constitue lui-même la zone portée à haute températur où se fixe le front de la flamme; dans la seconde le foyer et le brûleur sont séparés par une conduit, isolée thermiquement et comportant la tuyère, traversée par le mélange inflammable à une vitesse supérieure à celle de la propagation de la flamme, cette dernière se fixant et se développant dans la chambre de combustion tronconique située à l'extrémité de la conduite. L'allumage du brûleur peut être électrique comme connu en soi.

L'alimentation en bois torréfié du dispositif est réalisé mécaniquement et a pour objet de maintenir pleine une colonne tubulaire ouverte au sommet située au-dessus du foyer de telle façon que la hauteur occupée dans celle-ci par le bois torréfié soit constante ainsi que la perte de charge d'un flux d'air la traversant de haut en bas.

L'apport d'air pilote assurant la combustion des vapeurs et de gaz combustibles dans la tuyère, crée en amont une dépression permettant d'une part l'admission d'air de combustion au niveau du foyer et d'autre part le balayage vers la bas et au travers de la colonne d'alimentation en bois torréfié, des vapeurs pyroligneuses.

Le foyer constitué par les braises issues de la combustion partielle du charbon de bois repose selon l'invention, sur une ole matérialisée par le lit de cendres lui-même. La situation stable du lit dans le dispositif est obtenue grâce à l'emploi d'un extracteur mécanique

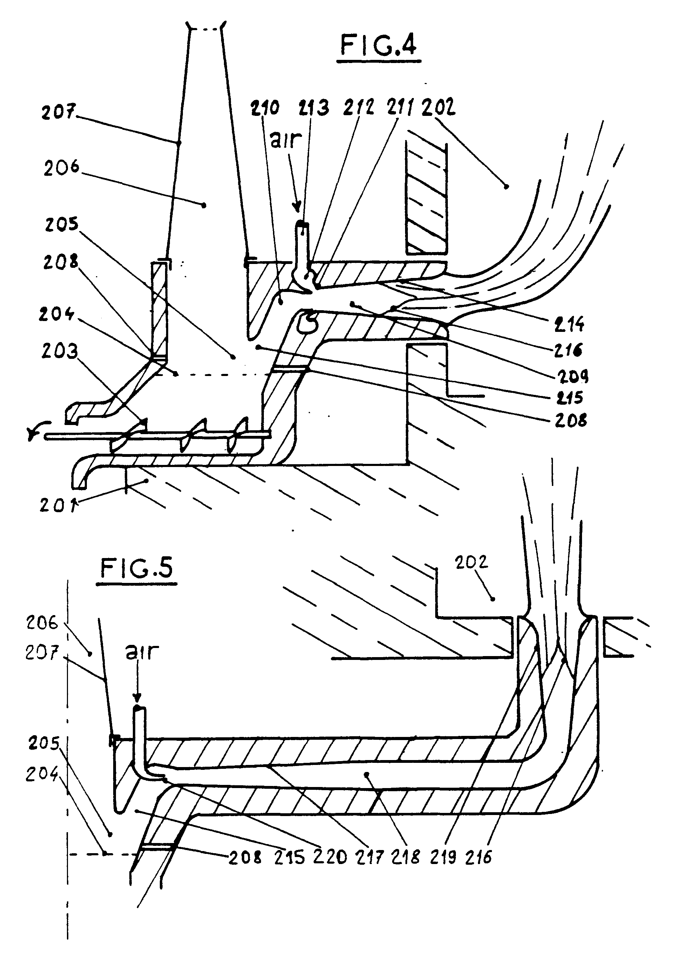

La figure 4 représente le dispositif reposant sur une console 201 voisine de l'ouvreau d'une enceinte thermique à chauffer 202.

A la base du dispositif est représentée en coupe schématique la vis 203 destinée à l'extraction mécanique des cendres, au-dessus de laquelle se situe le lit de cendres 204 sur lequel repose la zone de braises 205 surmontée de la réserve pleine de bois torréfié 206 emplissant le tuyau amovible 207.

Au niveau de la zone de braises, soit 10 à 20 cm au-dessus des cendres, la paroi du corps de l'appareil est percée de trous 208 par lesquels l'air de combustion du charbon de bois est admis.

La chambre intérieure du dispositif se développe ensuite vers la tuyère 209 on aperçoit à la base du conduit de liaison 210 incliné vers le haut le talus d'éboulement 215 formé par les braises en ignition.

A l'étranglement de la tuyère se situe l'ajutage annulaire 211 en communication avec la chambre 212 et le conduit d'omenée d'air 213 pilote et de combustion de vapeurs et gaz dans le brûleur 216.

Le divergent 214 de la tuyère est à forte ouverture car il constitué la chambre de combustion elle-même où se stabilisé le front de flamme dans le brûleur.

Une dépression résultant du principe même de fonctionnement de la tuyère s'installe en amont du brûleur c'est-à-dire dans le foyer lui-même.

La mise en marche et le fonctionnement du dispositif peuvent être obtenus de la façon suivante: un lot de centres est utilisé pour constituer la sole initiale. Sur celle-ci on dépose du charbon de bois jusqu'à hauteur de talus d'éboulement 215. On établit la pression d'air pilote dans la chambre 212. L'écoulement de l'air dans l'ajutage 211 met le foyer en dépression. Le tuyau amovible 207 ayant été enlevé, à l'aide d'une flamme on allume le charbon de bois placé sur le lit de cendres, puis on remet en place le tuyau 207 que l'on emplit de bois torréfié. Presque aussitôt le dispositif émet une intense fumée blanche sortant de la tuyère 214 il s'agit des vapeurs pyroligneuses que l'on peut, dès lors, allumer. Un appareillage électrique non représenté peut être utilisé à cet effet.

Du fait de la dépression établie dans le foyer, l'air pénètre par les trous 208 prévus à cet effet et entretient la combustion du charbon de bois. La même dépression appelle un faible flux d'air circulant de haut en bas dans le tuyau 207 en traversant le bois torréfié. Ce flux d'air balaye les vapeurs pyroligneuses extraites à l'approche du foyer, les entraîne vers le conduit d'amenée au brûleur, elles s'y mélangent avec l'oxyde de carbone très chaud dans le foyer puis enfin avec l'air pilote préchauffée amené au brûleur pour former dans celui-ci le front de flamme qui se développera dans l'enceinte thermique 207.

La figure 5 représente une variante du dispositif dans laquelle le divergent de la tuyère 217 de type Venturi, est beaucoup plus allongé. Il en résulte l'établissement dans la conduit 218 d'une vitesse de déplacement du mélange inflammable supérieure à celle de propagation de la flamme qui s'établira alors dans un second divergent à ouverture plus large 219 situé à l'extrémité du conduit 218. Cette disposition permet d'alimenter un four à proximité duquel il est impossible de placer convenablement le dispositif de la figure 4.

Le conduit 218 doit être convenablement isolé pour ne pas autoriser l'abaissement de la température des vapeurs pyroligneuses, pour la même raison l'air de cmbustion admis à l'injecteur axial 220 devra être suffisamment préchauffé.

On observera que les caractéristiques géométriques du produit de l'invention assurent sa descente régulière vers la zone chaude du foyer, et une perméabilité en masse constante pour l'air de balayage. Il en résulte une grande stabilité de la répartition des températures, et par suite de la composition du mélange combustible amené au brûleur.

**Revendications**

1. Procédé d'obtention d'un produit utilisable notamment pour la production d'énergie thermique, ce procédé comprenant un sechage (IV) suivi d'une torréfaction (V) de morceaux de bois "verts" à une température de 250 à 280°C en atmosphère non oxydante, suivie d'un refroidissement, caractérisé en ce qu'il comprend les étapes suivantes précédant le séchage:
   a) culture de végétaux susceptibles de donner, après coupe, des rejets ligneux sensiblement rectilignes de diamètre compris entre 5 et 20 mm, la culture desdits végétaux étant conduite de façon à obtenir lesdits rejets;
   b) récolte des rejets suivie d'un tronçonnage de ceux-ci en bâtonnets "verts", non écorcés de longueur uniforme comprise entre 10 et 25 mm environ.

2. Procédé selon la revendication 1, caractérisé en ce que ladite culture comprend l'obtention de souches enracinées (15, 16) desdits végétaux et des coupes périodiques des rejets (1) faites au-dessus du niveau du collet de chaque végétal, les coupes successives étant faites à des hauteurs croissantes, au moins jusqu'à ce que la densité de rejets par unité de surface atteigne la valeur désirée.

3. Procédé selon l'une des revendications 1 ou 2, caractérisé en ce que la coupe est faite lorsque les rejets (1) ont une hauteur de 1,5 à 2 m.

4. Procédé selon l'une des revendications 1 à 3, caractérisé en ce que la coupe est faite après la chute des feuilles.

5. Procédé selon l'une des revendications 1 à 4, caractérisé en ce que le tronçonnage est fait immédiatement après la coupe.

6. Procédé selon l'une des revendications 1 à 5, caractérisé en ce qu'on opère le tronçonnage en alignant les rejets coupés (3) parallèlement entre eux, et en les faisant passer devant une série de couteaux rotatifs (7).

7. Procédé selon l'une des revendications 1 à 6, caractérisé en ce que, dans un réacteur (101), on place une masse (115) de tronçons à torréfier, et on fait circuler dans cette masse un gaz non oxydant, ce gaz pénétrant dans la masse à une température supérieure à celle de la torréfaction, traversant la masse en passant d'abord sur des tronçons non séchés ou partiellement séchés, et sortant de la masse en passant sur les tronçons en fin de torréfaction et en ce que la vitesse de circulation des gaz n'est que faible inférieure à celle qui causerait l'entraînement des tronçons torréfiés par le courant de gaz.

8. Procédé selon la revendication 7, caractérisé en ce que ledit gaz non oxydant circule en partie en circuit fermé, et est constitué essentiellement de vapeur d'eau provenant des tronçons et de gaz de combustion provenant d'un brûleur (116) destiné à élever la température dudit gaz.

9. Procédé selon la revendication 8, caractérisé en ce qu'une partie dudit gaz est refroidie et débarrassée (en 109) d'une partie de son eau, puis envoyée dans la masse qui vient d'être torréfiée, de façon à la refroidir et à empêcher l'apparition de réactions exothermiques.

10. Procédé selon l'une des revendications 7 à 9, caractérisé en ce que le temps de torréfaction à partir du moment où le produit atteint 100°C, ne dépasse pas 10 minutes.

11. Procédé selon l'une des revendications 7 à 10, caractérisé en ce que la torréfaction et le refroidissement sont effectués dans une enceinte unique s'étendant verticalement et pourvue de dispositifs étanches pour l'admission dz produit "vert" à la partie supérieure et pour l'évacuation de produite torréfié à la partie inférieure, du gaz non oxydant à haute température étant envoyé à la partie supérieure sous une pression supérieure à la pression atmosphérique (par 121) du gaz non oxydant à basse température étant envoyé à la partie inférieure sous une pression supérieure à la pression atmosphérique (par 123), un moyen d'extraction (105) étant prévu pour faire passer le produit qui a été torréfié dans la zone supérieure de l'enceinte vers la zone inférieure (107), où il se refroidit.

12. Procédé selon la revendication 11, caractérisé en ce qu'on renvoie à la partie supérieure de l'enceinte une partie du gaz non oxydant qui a été évacué de la zone centrale de l'enceinte.

13. Procédé selon l'une des revendications 7 à 12, caractérisé en ce que le séchage précède la torréfaction sans refroidissement intermédiaire.

14. Procédé selon l'une des revendications 8 à 13, caractérisé en ce que le séchage est opéré à l'aide des gaz chauds provenant de la torréfaction.

15. Procédé de production d'énergie thermique à l'aide du produit obtenu selon l'une des revendications 1 à 14, caractérisé en ce qu'on procède à la combustion du produit torréfié dans une installation fonctionnant de façon automatisée.

16. Procédé selon la revendication 15, caractérisé en ce qu'on extrait par distillation sensiblement toutes les matières pyroligneuses contenues dans le produit torréfié, on transforme le carbone restant en monoxyde de carbone, la chaleur produite par cette réaction étant utilisée pour opérer ladite distillation, et on envoie ensemble le mélange des matières pyroligneuses et du monoxyde de carbone dans un brûleur (216), en maintenant la température desdites matières pyroligneuses au-dessus de leur point de condensation.

17. Procédé selon la revendication 16, caractérisé en ce que la distillation des matières pyroligneuses et la transformation du carbon en monoxyde de carbon ont lieu dans le même foyer, qui est pourvu d'une part d'un ou plusieurs passages de gaz pour balayer les matières pyroligneuses et d'autre part d'un ou plusieurs passages d'air (208) pour la transformation de carbone en monoxyde de carbone, le foyer comportant une sortie commune (210) pour les matières pyroligneuses distillées et pour le monoxyde de carbon.

18. Procédé selon l'une des revendications 16 ou 17, caractérisé en ce que le gaz destiné à balayer les matières pyroligneuses traverse, dans le sens des températures croissantes, une masse de produite torréfié (206) d'épaisseur suffisante pour assurer un débit sensiblement constant.

19. Procédé selon l'une des revendications 16 à 18, caractérisé en ce que le foyer est du type vertical, le produit torréfié progressant (206) en descendant dans ce foyer, le gaz de balayage traversant la masse du produit torréfié en descendant, la ou les arrivées d'air (208) pour la transformation du carbon étant situées au-dessus d'une couche de cendres (204) maintenue à un niveau sensiblement constant, et la sortie commune (210) des matières pyroligneuses et du monoxyde de carbone étant située entre le niveau des cendres et celui de la base de la zone de distillation.

20. Procédé selon l'une des revendications 16 à 19, caractérisé en ce qu'on utilise un brûleur du type à induction à air pilote (211 à 213, 220) capable d'engendrer dans le foyer une dépression suffisante pour y aspirer le gaz de balayage et l'air de transformation du carbone.

21. Produit provenant de la torréfaction entre 250 et 280°C de fragments ligneux, caractérisé en ce qu'il se présente essentiellement sous la forme de bâtonnets de diamètre compris entre 5 et 20 mm, non écorcés et de longeur uniforme comprise entre 10 et 25 mm environ.

**Patentansprüche**

1. Verfahren zur Herstellung eines insbesondere zur thermischen Energieerzeugung verwendbaren Produkts, welches für "grüne" Holzstücke einen Trocknungsschritt (IV) umfaßt, gefolgt von einem Röstschritt (V) bei einer Temperatur von 250 bis 280°C in nicht oxidierender Atmosphare, gefolgt von einem Abkühlschritt, dadurch gekennzeichnet, daß der Trocknung folgende Schritte vorausgehen:

a) Anbau von Gewächsen, welche geeignet sind, nach dem Schnitt im wesentlichen gerade Holzschößlinge mit einem Durchmesser zwischen 5 und 20 mm zu ergeben, wobei der Anbau dieser Gewächse auf die Erzeugung der genannten Schoßlinge ausgelegt ist;

b) Abernten der Schoßlinge mit anschließendem Zerschneiden dieser in "grüne", nicht entrindete Stäbchen von einheitlicher Länge zwischen ca. 10 und 25 mm.

2. Verfahren nach Anspruch 1, dadurch gekennzeichnet, daß der Anbau die Erzeugung angewachsener Wurzelstöcke (15, 16) der Gewächse und periodische Schnitt der Schößlinge (1) oberhalb des Wurzelhalses einer jeden Pflanze beinhaltet, und die folgenden Schnitte jeweils in zunehmenden Höhen vorgenommen werden, zumindest solange, bis die Schoßlingsdicht pro Flächeneinheit den gewünschten Wert erreicht.

3. Verfahren nach einem der Ansprüche 1 oder 2, dadurch gekennzeichnet, daß der Schnitt dann vorgenommen wird, wenn die Höhe der Schößlinge (1) 1,5 bis 2 m baträgt.

4. Verfahren nach einem der Ansprüche 1 bis 3, dadurch gekennzeichnet, daß der Schnitt nach Abwerfen des Laubes vorgenommen wird.

5. Verfahren nach einem der Ansprüche 1 bis 4, dadurch gekennzeichnet, daß das Zerschneiden sofort nach dem Schnitt erfolgt.

6. Verfahren nach einem der Ansprüche 1 bis 5, dadurch gekennzeichnet, daß die abgeschnittenen Schößlinge (3) zum Zerschneiden parallel zueinander angeordnet und vor eine Reihe rotierender Messer (7) befördert werden.

7. Verfahren nach einem der Ansprüche 1 bis 6, dadurch gekennzeichnet, daß man in einen Reaktor (101) eine Masse (115) zu röstender Schnittstücke einbringt und in dieser Masse ein nicht oxidierendes Gas zirkulieren läßt, wobei das Gas in die Masse bei einer höheren Temperatur als der bei der Röstung eindringt, die Masse angefangen bei nicht oder teilweise getrockneten Schnittstücken durchdringt und über zu Ende geröstete Schnittstücke austritt, und dadurch, daß die Zirkulationsgeschwindigkeit der Gase nur geringfügig unter derjenigen liegt, welche ein Mitreißen der gerösteten Schnittstücke durch den Gasstrom hervorrufen würde.

8. Verfahren nach Anspruch 7, dadurch gekennzeichnet, daß nicht oxidierende Gas zum Teil im geschlossenen Kreislauf zurkuliert, und im wesentlichen aus von den Schnittstücken stammenden Wasserdampf und aus von einem Brenner (116) zur Erhöhung der Gastemperatur stammenden Verbrennungsgas besteht.

9. Verfahren nach Anspruch 8, dadurch gekennzeichnet, daß ein Teil des Gases abgekühlt und von einem Teil seines Wassers befreit wird (in 109), und dann zur gerade gerösteten Masse geleitet wird, um diese abzukühlen und das Auftreten von exothermen Reaktionen zu verhindern.

10. Verfahren nach einem der Ansprüche 7 bis 9, dadurch gekennzeichnet, daß die Röstungszeit ab dem Zeitpunkt, an dem die Temperatur des Produkts 100°C beträgt, 10 Minuten nicht überschteitet.

11. Verfahren nach einem der Ansprüche 7 bis 10, dadurch gekennzeichnet, daß die Röstung und die Abkühlung in einem einzigen, sich vertikal erstreckenden Behälter stattfindet, welcher mit dichten Vorrichtungen zur Aufnahme des "grünen" Materials im oberen Teil und der Entnahme des gerösteten Materials im unteren Teil versehen ist, wobei nicht oxidierendes Gas mit hoher Temperatur in den oberen Teil mit einem über dem atmosphärischen Druck liegenden Druck (durch 121), und nicht oxidierendes Gas mit niedriger Temperatur in den unteren Teil mit einem über dem atmosphärischen Druck liegenden Druck (über 123) eingeleitet wird, und eine Entnahmeeinrichtung (105) vorgesehen ist, um das im oberen Bereich des Behälters geröstete Material in den unteren Bereich (107) zu befördern, wo es sich abkühlt.

12. Verfahren nach Anspruch 11, dadurch gekennzeichnet, daß ein Teil des nicht oxidierenden Gases, welches vom zentralen Bereich des Behälters abgezogen wurde, in den oberen Teil des Behälters zurückgeleitet wird.

13. Verfahren nach einem der Ansprüche 7 bis 12, dadurch gekennzeichnet, daß die Trocknung der Röstung ohne Zwischenabkühlung vorangeht.

14. Verfahren nach einem der Ansprüche 8 bis 13, dadurch gekennzeichnet, daß die Trocknung mit Hilfe der von der Röstung stammenden heißen Gasen durchgeführt wird.

15. Verfahren zur Erzeugung von thermischer Energie mit Hilfe des gewonnenen Produktes nach einem der Ansprüche 1 bis 14, dadurch gekennzeichnet, daß die Verbrennung des gerösteten Materials in einer automatisiert arbeitenden Anlage vorgenommen wird.

16. Verfahren nach Anspruch 15, dadurch gekennzeichnet, daß durch Destillation praktisch alle, im gerösteten Material enthaltenen, zerstörend destillierten Bestandteile entzogen werden und der restliche Kohlenstoff im Kohlenmonoxid umgewandelt wird, wobei die somit erzeugte Wärme zum Betreiben der genannten Destillation verwendet wird, und die Mischung aus zerstörend destillierten Bestandteilen und Kohlenmonoxid zusammen in einen Brenner (216) überführt wird, wobei die Temperatur der zerstörend destillierten Bestandteile über deren Kondensationspunkt gehalten wird.

17. Verfahren nach Anspruch 16, dadurch gekennzeichnet, daß die Destillation der zerstörend destillierten Bestandteile und die Umwandlung des Kohlenstoffs in Kohlenmonoxid im selben Feuerraum ablaufen, der zum einen einen oder mehrere Gasleitungen zum Ausspülen der zerstörend destillierten Bestandteile und zum anderen einen oder mehrere Luftleitungen (208) zur Umwandlung des Kohlenstoffs in Kohlenmonoxid aufweist, wobei der Feuerraum einen gemeinsamen Ausgang (210) für die zerstörend destillierten Bestandteile und das Kohlenmonoxid aufweist.

18. Verfahren nach einem der Ansprüche 16 oder 17, dadurch gekennzeichnet, daß das Gas zum Ausspülen der zerstörend destillierten Bestandteile in Richtung steigender Temperaturen eine Masse gerösteten Materials (206) mit ausreichender Dicke zur Sicherung einer im wesentlichen konstanten Leistung durchströmt.

19. Verfahren nach einem der Ansprüche 16 bis 18, dadurch gekennzeichnet, daß der Feuerraum vertikal angeordnet ist, das geröstete Material (206) durch eine Abwärtsbewegung in den Feuerraum fortbewegt wird, das Spülgas die Masse des gerösteten Materials nach unten gerichtet durchtrömt, die Luftzuführung/en (208) zur Umwandlung des Kohlenstoffs oberhalb einer im Niveau im wesentlichen konstant bleibenden Ascheschicht (204) gelagert ist/sind und dadurch, daß der gemeinsame Ausgang (210) der zerstörend destillierten Bestandteile und des Kohlenmonoxids zwischen dem Niveau der Ascheschicht und dem der Basis des Destillationsbereichs liegt.

20. Verfahren nach einem der Ansprüche 16 bis 19, dadurch gekennzeichnet, daß ein Brenner vom Typ eines Induktionsbrenners unter Verwendung von Ansaugluft (211 bis 213, 220) verwendet wird, welcher zur Erzeugung eines ausreichenden Unterdrucks im Feuerraum geeignet ist, um das Spülgas und die Luft der Kohlenstoffumwandlung dorthinein anzusaugen.

21. Produkt aus der Röstung von Holzteilen zwischen 250 und 280°C, dadurch gekennzeichnet, daß es im wesentlichen aus nicht entrindeten Stäbchen mit einem Durchmesser zwischen 5 und 20 mm und mit einer einheitlichen Länge zwischen ca. 10 und 25 mm besteht.

**Claims**

1. A process for obtaining a product that is useful, in particular, for the production of thermal energy, the process including drying (IV) followed by torrefaction (V) of particles of green wood at a temperature of 250 to 280 degrees C. in a non-oxidising atmosphere, followed by cooling, characterised in that it includes the following steps prior to the drying stage:

(a) the culture of plants which are capable, after being cut, of yielding substantially straight ligneous poles having a diameter lying between 5 and 20 mm, the culture of the said plants being carried out in such a way so that the said poles are obtained;

b) harvest of the poles followed by shortening of the latter into barkless green slugs having a uniform length lying between about 10 and 25 mm.

2. A process according to Claim 1, characterised in that the said culture includes obtaining rooted stumps (15, 16) of the said plants and periodic cuts of the said poles (1) which are made above the level of the bole of each plant, the successive cuts being made at increasing heights, at least until the density of the poles per unit of surface area reaches the desired value.

3. A process according to one of Claims 1 or 2, characterised in that the cutting is carried out when the said poles (1) are 1.5 to 2 metres in height.

4. A process according to one of Claims 1 to 3, characterised in that the cutting is carried out after removal of the leaves.

5. A process according to one of Claims 1 to 4, characterised in that the shortening step is carried out immediately after cutting.

6. A process according to one of Claims 1 to 5, characterised in that the shortening step is performed by aligning the cut poles (3) parallel with each other, and by causing them to pass in front of a series of rotating knives (7).

7. A process according to one of Claims 1 to 6, characterised in that a mass (115) of short pieces to be torrefied is placed in a reactor (101) and a non-oxidising gas is caused to circulate in the said mass, with the said gas penetrating into the mass at a temperature higher than that of torrefaction, traversing the mass by passing first of all through the undried or partially-dried short pieces, and leaving the mass by passing over those short pieces in which the torrefaction is ending, and in that the velocity of circulation of the gases is only slightly lower than that which would cause the torrefied short pieces to be entrained by the gas stream.

8. A process according to Claim 7, characterised in that the said non-oxidising gas circulates partly in closed circuit, and essentially comprises water vapour from the short pieces and from combustion gas derived from a burner (116) for raising the temperature of the said gas.

9. A process according to Claim 8, characterised in that part of the said gas is cooled and relieved (at 109) of part of its water content, being then passed into the mass that has just been torrefied, so as to cool it and to inhibit the occurrence of exothermic reactions.

10. A process according to one of Claims 7 to 9, characterised in that the torrefaction time, from the moment at which the product reaches 100 degrees C. is no greater than ten minutes.

11. A process according to one of Claims 7 to 10, characterised in that the torrefaction and cooling stages are carried out in a single autoclave extending vertically and provided with sealed means for the admission of green product into the upper part and for the evacuation of the torrefied product from the lower part, non-oxidising gas being passed at high temperature into the upper part via a pressure greater than atmospheric pressure (via 121), non-oxidising gas at low temperature being passed into the lower part under a pressure greater than atmospheric pressure (via 123), an extraction means (105) being provided for moving the product which has been torrefied in the upper zone of the autoclave, towards the lower zone (107), in which it cools.

12. A process according to Claim 11, characterised in that part of the non-oxidising gas which has been evacuated from the central zone of the autoclave is passed to the upper part of the autoclave.

13. A process according to one of Claims 7 to 12, characterised in that the drying stage precedes the torrefaction stage without any intermediate cooling.

14. A process according to one of Claims 8 to 13, characterised in that the drying stage is carried out with the aid of hot gases produced in the torrefaction stage.

15. A process for producing thermal energy using the product obtained according to one of Claims 1 to 14, characterised in that the torrefied product proceeds to combustion in an installation operating automatically.

16. A process according to Claim 15, characterised in that substantially all the pyroligneous materials contained in the torrefied product are extracted by distillation, the residual carbon is converted to carbon monoxide, the heat producted by this reaction being utilised to carry out the said distillation, and the mixture of pyroligneous materials and carbon monoxide is transferred together into a burner (216), maintaining the temperature of the said pyroligneous materials above their condensation point.

17. A process according to Claim 16, characterised in that the distillation of the pyroligneous material and the conversion of the carbon into carbon monoxide take place in the same enclosure, which is provided on the one hand with at least one gas passage for scavenging the pyroligneous materials, and on the other hand with at least one air passage (208) for the conversion of carbon to carbon monoxide, the enclosure including a common outlet (210) for the distilled pyroligneous materials and for the carbon monoxide.

18. A process according to one of Claims 16 to 17, characterised in that the gas for scavenging the pyroligneous materials passed in the direction of increasing temperatures, through a mass of torrefied product (206) having a thickness which is sufficiently large to ensure a substantially constant flow.

19. A process according to one of Claims 16 to 18, characterised in that the enclosure is of the vertical type with the torrefied product progressing downwardly (206) in the said enclosure, the scavenging gas passing downwardly through the mass of torrefied product, the air inlet or inlets (208) for admission of air for transformation of the carbon being situated above a bed of ash (204) which is maintained at a substantially constant level, and the common outlet (210) for pyroligneous materials and carbon monoxide being situated between the level of the ash and that of the base of the distillation zone.

20. A process according to one of Claims 16 to 19, characterised in that a burner is used that is of the air pilot induction type (211—213, 220) capable of creating in the enclosure a reduction in pressure sufficient to draw into it the scavenging gas and the air for converting the carbon.

21. A product of the torrefaction between 250 and 280 degrees C. of ligneous fragments, characterised in that it is essentially in the form of bars having a diameter lying between 5 and 20 mm, free of bark and having a uniform length lying between 10 and 25 mm approximately.

FIG.: 1

| | |
|---|---|
| I | CULTURE |
| II | RÉCOLTE |
| III | TRONÇONNAGE |
| IV | SÉCHAGE |
| V | TORRÉFACTION |

| COMBUSTION | CHIMIE | BATIMENT | VALORISA_TION DÉCHETS |
|---|---|---|---|
| VI A | VI B | VI C | VI D |

FIG.:2

EP 0 223 807 B1

FIG. :3

## FIG.4

207
206
205
208
204
203
201

210 213 212 211 202
air

214
216
209
215
208

## FIG.5

206
207
air
205
204

202

208 215 220 217 218 219 216